# EUROPÄISCHE PATENTSCHRIFT

(11) **EP 4 403 331 B1**
(45) Veröffentlichungstag und Bekanntmachung des Hinweises auf die Patenterteilung: **26.03.2025**
(21) Anmeldenummer: 23152007.3
(22) Anmeldetag: 17.01.2023
(51) Int. Cl.: B29C 45/26, B29C 45/27, B29C 33/38, B29C 33/02

(54) **ISOLATIONSKÖRPER UND SPRITZGUSSWERKZEUG MIT EINEM SOLCHEN ISOLATIONSKÖRPER**
INSULATING BODY AND INJECTION MOULDING TOOL COMPRISING SUCH AN INSULATING BODY
CORPS ISOLANT ET OUTIL DE MOULAGE PAR INJECTION DOTÉ D'UN TEL CORPS ISOLANT

(43) Veröffentlichungstag der Anmeldung: 24.07.2024
(73) Patentinhaber: Witosa GmbH, 35066 Frankenberg/Wangershausen (DE)
(72) Erfinder: GLITTENBERG, Torsten, 35066 Frankenberg (DE); HALLENBERGER, Martin, 35088 Frohnhausen (DE)
(74) Vertreter: Walther Bayer Faber Patentanwälte PartGmbB

(56) Entgegenhaltungen:
- EP-A1- 4 086 059
- WO-A1-2020/050851
- US-A1- 2021 114 094
- US-A1- 2022 347 763

## Beschreibung

Die Erfindung betrifft einen Isolationskörper eines Spritzgusswerkzeugs zur thermischen Isolation eines ersten Bauteils gegen ein zweites Bauteil des Spritzgusswerkzeuges oder einen Isolationskörper als Bestandteil eines Bauteils des Spritzgusswerkzeuges, wobei der Isolationskörper ein Metall aufweist, das direkt aus einer metallischen Schmelze gebildet ist und eine amorphe Struktur aufweist. Die Erfindung richtet sich ferner auf ein Spritzgusswerkzeug mit einem solchen Isolationskörper zur thermischen Isolation eines ersten Bauteils gegen ein zweites Bauteil des Spritzgusswerkzeuges.

### STAND DER TECHNIK

Beispielsweise zeigt die US 2019/0160719 A1 Isolationskörper eines Spritzgusswerkzeuges zur thermischen Isolation eines Heißkanalverteilerkörpers gegen einen weiteren Werkzeugkörper, der als Düsenkopf ausgebildet ist. Der plattenförmige Heißkanalverteiler befindet sich vorderseitig und hinterseitig zwischen zwei Werkzeugkörpern, und eine Heißkanaldüse ist am Heißkanalverteilerkörper angeordnet, sodass plastifizierte Kunststoffschmelze aus dem Heißkanalverteilerkörper in die Heißkanaldüse und schließlich in eine Kavität eines Formwerkzeugs überführt werden kann. Der Heißkanalverteilerkörper sowie die Heißkanaldüse weisen eine Temperatur auf, bei der eine Kunststoffschmelze fließfähig gehalten werden kann, während die umbauenden Werkzeugkörper beispielsweise nur eine Raumtemperatur oder eine leicht erhöhte Temperatur aufweisen, die aber wesentlich niedriger ist als die Temperatur der Heißkanaldüse und des Heißkanalverteilerkörpers. Um einen Wärmeübergang vom Heißkanalverteilerkörper in die umliegenden Werkzeugkörper möglichst zu minimieren, sind Isolationskörper in Form von Druckstücken bekannt, die so gestaltet sind, dass möglichst ein geringer Wärmestrom vom Heißkanalverteilerkörper in die umgebenden Werkzeugkörper stattfindet. Beispielsweise können Druckstücke oder Düsenköpfe mit geringeren Materialquerschnitten oder Kontaktflächen ausgebildet sein, um eine Wärmeleitung zu minimieren, der Werkstoff der Druckstücke ist jedoch in der Regel aus dem selben wärmeleitenden Stahlwerkstoff ausgebildet wie der Werkstoff der weiteren Werkzeugkörper, insbesondere aufgrund der notwendigen mechanischen Festigkeit.

Die US 7,845,936 B2 zeigt einen weiteren Isolationskörper in einem Spritzgusswerkzeug zur thermischen Isolation eines ersten Bauteils gegen ein zweites Bauteil des Spritzgusswerkzeuges, nämlich zur Aufnahme der Heißkanaldüse am Heißkanalverteilerkörper, sodass der Isolationskörper einen Düsenkopf bildet. Der Düsenkopf stützt sich dabei auch gegen den Werkzeugkörper niedriger Temperatur ab, und der Übergangsbereich des Düsenkopfes, der schließlich zum Kontakt mit dem kalten Werkzeugkörper dient, weist eine Querschnittsverringerung auf, um den Wärmestrom in den kalten Werkzeugkörper zu minimieren.

Damit sind Isolationskörper als Bestandteil von Spritzgusswerkzeugen bekannt, die zur thermischen Isolation eines ersten Bauteils gegen ein zweites Bauteil des Spritzgusswerkzeuges dienen, wobei der erreichbare thermische Isolationseffekt nur gering ausfällt. Auch können beispielsweise Heißkanaldüsen Abschnitte mit Werkstoffen aufweisen, die einen verringerten Wärmeübergang beispielsweise an das Formwerkzeug zur Bildung der Kavität selbst ermöglichen, insbesondere durch entsprechende Querschnittsverringerungen oder geringe Anlageflächen. Nachteilhafterweise sind die Isolationskörper als Bestandteile von Spritzgusswerkzeugen aus einem Werkstoff ausgebildet, der eine ansonsten hohe thermische Leitfähigkeit aufweist, beispielsweise etwa 15 bis 50 W/mK oder gar noch deutlich mehr. Gewöhnliche metallische Werkstoffe weisen sehr hohe Wärmeleitfähigkeiten auf, wobei Isolationskörper der hier interessierenden Art zudem hohe Kräfte tragen müssen, sodass sich die Notwendigkeit üblicher metallischer Werkstoffe ohnehin ergibt. Der Einsatz von Keramiken für derartige Isolationskörper ist ebenfalls bekannt, aber auch hierbei sind aufgrund der sprödharten Eigenschaft von Keramiken die Einsatzmöglichkeiten begrenzt.

Aus der EP 4 086 059 A1 oder aus der WO 2020/050851 A1 ist jeweils ein Isolationskörper eines Spritzgusswerkzeugs zur thermischen Isolation eines Bauteils des Spritzgusswerkzeuges bekannt geworden, wobei der Isolationskörper ein Metall aufweist, das direkt aus einer metallischen Schmelze gebildet ist und eine amorphe Struktur aufweist. Der Isolationskörper aus der amorphen Struktur ist dabei als Oberflächenbeschichtung oder als Deckkörper ausgeführt und bildet damit im Wesentlichen einen 2-dimensionalen Körper auf der Abformoberfläche des Spritzgusswerkzeugs, der mit der Kunststoffschmelze in Kontakt gelangen und diese thermisch isolieren soll, wenn das Spritzgusswerkzeug im Einsatz ist und in dessen Kavität eine plastifizierte Kunststoffschmelze eingespritzt wird. Ein funktionsbildendes dreidimensionales Bauteil des Spritzgusswerkzeuges bildet damit das amorphe Metall, auch metallisches Massivglas genannt, nicht.

### OFFENBARUNG DER ERFINDUNG

Die Aufgabe der Erfindung ist die weitere Verbesserung eines Isolationskörpers eines Spritzgusswerkzeuges zur thermischen Isolation eines ersten Bauteils gegen ein zweites Bauteil des Spritzgusswerkzeuges und/oder als Bestandteil eines Bauteils des Spritzgusswerkzeuges. Dabei soll der Isolationskörper bei zugleich hoher mechanischer Belastbarkeit eine möglichst geringe Wärmeleitfähigkeit ausweisen.

Die Aufgabe der Erfindung wird ausgehend von einem Isolationskörper gemäß dem Oberbegriff des Anspruchs 1 und ausgehend von einem Spritzgusswerkzeug gemäß dem Oberbegriff des Anspruchs 9 mit den jeweils kennzeichnenden Merkmalen gelöst. Vorteilhafte Weiterbildungen der Erfindung sind in den abhängigen Ansprüchen angegeben.

Zur Lösung der Aufgabe und zur Bereitstellung eines entsprechenden Isolationskörpers ist erfindungsgemäß vorgesehen, dass der Isolationskörper ein Druckstück zur Anordnung zwischen einem Heißkanalverteilerkörper und einem Werkzeugkörper bildet und/oder dass der Isolationskörper einen Düsenkopf zur Aufnahme einer Heißkanaldüse auf dem Heißkanalverteilerkörper bildet und/oder dass der Isolationskörper einen Aufsatz zur Anordnung an einer Düsenspitze einer Heißkanaldüse bildet und/oder dass der Isolationskörper einen Bestandteil einer einteilig ausgebildeten Heißkanaldüse bildet.

Sogenannte amorphe Metalle oder metallische Gläser weisen Metall-Legierungen oder Metall-Nichtmetall-Legierungen auf, die nicht auf einem Metallgitter basieren sondern eine amorphe Struktur besitzen. Dabei gibt es auch massive metallische Gläser, die Isolationskörper bilden können, wie sie für ein Spritzgusswerkzeug oder als Bestandteil eines Spritzgusswerkzeuges zum Einsatz kommen können oder für ein Spritzgusswerkzeug geeignet zum Einsatz kommen können. Der Erfindungsgedanke basiert insofern darauf, an sich bekannte Isolationskörper in einem Spritzgusswerkzeug auf einem völlig neuen Werkstoff aufzubauen, der als ein amorphes Metall, eine amorphe Legierung oder als ein sogenanntes metallisches Glas bezeichnet wird.

Auch bei amorphen Metallen entsteht eine amorphe Struktur vergleichbar wie auch bei Gläsern auf Siliziumbasis, indem die natürliche Kristallisation verhindert wird. In der Regel erfolgt die Verhinderung der Kristallisation durch ein sehr rasches Abkühlen, was beispielsweise mittels eines Schockfrostens einer metallischen Schmelze erfolgen kann, sodass den Atomen die Beweglichkeit genommen wird, bevor sie sich in eine Kristallordnung begeben können und sich als Resultat eine amorphe Struktur einstellt, die Schmelze insofern wie sie ist erstarrt. Mittels der Zugabe bestimmter Legierungsbestandteile kann alternativ auch eine metallische Schmelze erzeugt werden, beispielsweise Zirkonium als Glasbildner.

Generell muss der schmelzflüssige Zustand des Metalls eingefroren werden. Der Vorteil eines 3D-Druckverfahrens ist das geringe notwendige Schmelzvolumen, sofern nicht zu viel Energie eingebracht wird, da sonst kristallines Gefüge entsteht. Dabei ist darauf zu achten, dass beim Aufbringen von weiteren Schichten die Kristallisationstemperatur in den darunterliegenden nicht überschritten wird, da sonst ebenfalls Kristallisationskeime entstehen können.

Im Spritzguss verwendbare Legierungen erlauben es, aufgrund ihrer sehr guten Glasbildungsfähigkeit die Herstellung von Bauteilen mit einer Wandstärke von beispielsweise bis zu 5mm herzustellen. Die erzielten Abkühlgeschwindigkeiten sind dabei zumeist ausreichend für das Einfrieren des schmelzflüssigen Zustandes des Metalls.

In der Regel sind dabei Legierungen aus mindestens zwei Metallen oder eines Metalls und eines Nichtmetalls notwendig, die amorphisierbar sind. Dabei können auch reine Metalle zum Einsatz kommen, beispielsweise Ferrit, dem ein sogenannter Glasbildner zugegeben wird, beispielsweise Bor oder Phosphor, etwa in der Zusammensetzung Fe₄B. Technische relevante amorphe Metalle sind daher zumeist spezielle Legierungen aus mehreren Elementen, für die die nötige Abkühlrate technisch erreichbar ist. Die Abkühlrate kann dabei in einem Bereich von beispielsweise 10⁶ Ks liegen. Bei langsameren Abkühlraten erfolgt die Kristallisation, die für amorphe Metalle eben vermieden werden soll.

Hier interessierende amorphe Metalle können Wärmeleitfähigkeiten von beispielsweise nur 2,5 W/mK aufweisen, wobei dennoch beispielsweise eine Vickershärte (HV5) von 540 erreicht wird. Mit diesen Werten ergibt sich bei einem Isolationskörper aus einem amorphen Metall eine sehr geringe Wärmeleitfähigkeit bei einer ansonsten sehr hohen Festigkeit, was für Spritzgusswerkzeuge oder als Bestandteil für Spritzgusswerkzeuge erfindungsgemäß genutzt werden kann.

Mit besonderem Vorteil ist der Isolationskörper einteilig ausgebildet und insbesondere mittels eines generativen Fertigungsverfahrens hergestellt. So kann der Isolationskörper mit frei gestaltet werden, beispielsweise mit einer Rippen- oder Lamellenstruktur, einer Wabenstruktur oder einer sonstigen Struktur mit Stegen und Lamellen und entsprechenden Hohlräumen, Öffnungen oder innen liegenden Kammern. Die geometrische Struktur des Isolationskörpers kann so gewählt werden, dass in der Hauptbelastungsrichtung der Isolationskörper hoch belastbar ist, während zugleich ein geringer Materialquerschnitt erzielt wird, um eine Wärmeleitung von einem ersten Bauteil in ein zweites Bauteil des Spritzgusswerkzeuges möglichst auch geometrisch zu minimieren. Insbesondere generative Fertigungsverfahren bieten eine hohe Gestaltungsfreiheit mit innenliegenden Hohlräumen, Hinterschneidungen, seitlichen Öffnungen und dergleichen, sodass der Isolationskörper aus dem amorphen Metall sowohl werkstoffspezifische Besonderheiten aufweist als auch geometrische Strukturen bilden kann, die eine Wärmeleitung zwischen zwei Bauteilen minimiert.

Insbesondere auch durch die einteilige Ausbildung des Isolationskörpers ist dieser einzeln handhabbar und es werden Verbindungsmittel, Befestigungsmittel und dergleichen vermieden, insbesondere Schrauben, Nieten oder sonstige Befestigungsmittel aus höherleitendem Material, wodurch sich eine weitere Optimierung einer minimalen Wärmeleitung ergibt.

Erfindungsgemäß ist der Isolationskörper als ein Druckstück zur Anordnung zwischen einem Heißkanalverteilerkörper und einem Werkzeugkörper des Spritzgusswerkzeuges ausgebildet. Druckstücke werden zumeist am Heißkanalverteilerkörper oder am Werkzeugkörper angeschraubt und bilden Distanzelemente, um einen geometrischen Abstand zwischen dem heißen Heißkanalverteilerkörper und dem kalten Werkzeugkörper einzuhalten. Folglich ist es insbesondere von Vorteil, wenn der Isolationskörper ein solches Druckstück bildet, da das Druckstück sowohl mit einem heißen Bauteil als auch mit einem kalten Bauteil in Kontakt steht, und dabei ein minimaler Wärmeübergang zu einer optimalen Energiestruktur des Spritzgusswerkzeuges führt. Werkzeugkörper können beispielsweise eine Aufspannplatte oder eine Formplatte sein, zwischen denen der zumeist auch plattenförmig ausgeführte Heißkanalverteilerkörper mit entsprechendem parallelen Abstand angeordnet ist.

Alternativ oder zusätzlich bildet der Isolationskörper erfindungsgemäß einen Düsenkopf zur Aufnahme einer Heißkanaldüse auf einem Heißkanalverteilerkörper, wobei der Düsenkopf sowohl in Kontakt mit dem Heißkanalverteilerkörper als auch mit einem weiteren Werkzeugkörper stehen kann. In der Regel werden Düsenköpfe dazu verwendet, Heißkanaldüsen am Heißkanalverteilerkörper aufzunehmen, beispielsweise über eine Gewindeverbindung, und der Düsenkopf kann planar beweglich auf einer Anschlussfläche des Heißkanalverteilerkörpers aufsitzen, um wärmebedingte Driftbewegungen zwischen den Werkzeugteilen auszugleichen. Insofern wird auch der Düsenkopf zwischen einem heißen ersten Bauteil und einem kälteren zweiten Bauteil angeordnet, sodass sich eine weitere Energieoptimierung des Spritzgusswerkzeuges dadurch ergibt, dass auch ein Düsenkopf als Isolationskörper gemäß der Erfindung ausgebildet wird, der insbesondere keine eigenen Heizelemente mehr besitzt.

Gemäß einer noch weiteren Ausgestaltung der Erfindung bildet der Isolationskörper einen Aufsatz, der als insbesondere ringförmiges Einzelteil zur Anordnung an einer Düsenspitze einer Heißkanaldüse dient. Der Aufsatz kann beispielsweise auf die Düsenspitze aufgeschraubt oder aufgepresst werden, und bildet das Bauteil, das als Bestandteil der Heißkanaldüse und damit auch als Bestandteil des Spritzgusswerkzeuges gegen ein Formwerkzeug zur Anlage gebracht wird, beispielsweise das die Kavität für den Spritzguss selbst bildet. Dabei ist es auch denkbar, dass der Isolationskörper einen Bestandteil einer einteilig ausgebildeten Heißkanaldüse bildet. Dies kann umgesetzt werden, indem der Isolationskörper als Bestandteil der einteilig ausgebildeten Heißkanaldüse mittels des generativen Fertigungsverfahrens auf einen Grundkörper der Heißkanaldüse aufgetragen wird, der aus einem abweichenden Werkstoff besteht, beispielsweise aus Werkzeugstahl. So wird der Vorteil genutzt, dass die sehr geringe Wärmeleitfähigkeit des Aufsatzes aufgrund des Werkstoffes umfassend das amorphe Metall, einen nur minimalen Wärmeeintrag von der Heißkanaldüse in den Werkzeugkörper bewirkt und damit einen Isolationskörper bildet, der strukturell einteilig in einen weiteren Körper übergeht.

Der Isolationskörper kann Zirkonium als Glasbildner aufweisen und damit Zirkonium - basiert ausgebildet sein. Als Beispiel kann der Isolationskörper insbesondere einen Werkstoff umfassend die Legierung Zr_{52,5}Ti₅Cu_{17,9}Ni_{14,6}Al₁₀ aufweisen.

Die Erfindung richtet sich weiterhin auf ein Spritzgusswerkzeug mit einem Isolationskörper zur thermischen Isolation eines ersten Bauteils gegen ein zweites Bauteil des Spritzgusswerkzeuges, wobei der Isolationskörper ein Metall aufweist, das direkt aus einer metallischen Schmelze gebildet ist und eine amorphe Struktur aufweist. Erfindungsgemäß ist dabei vorgesehen, dass der Isolationskörper ein Druckstück zur Anordnung zwischen einem Heißkanalverteilerkörper und einem Werkzeugkörper bildet und/oder dass der Isolationskörper einen Düsenkopf zur Aufnahme einer Heißkanaldüse auf dem Heißkanalverteilerkörper bildet und/oder dass der Isolationskörper einen Aufsatz zur Anordnung an einer Düsenspitze einer Heißkanaldüse bildet und/oder dass der Isolationskörper einen Bestandteil einer einteilig ausgebildeten Heißkanaldüse bildet. Über die weiteren Merkmale und Vorteile der amorphen Struktur und des Metalls aus einem amorphen Werkstoff, die in Zusammenhang mit dem Isolationskörper obenstehend beschrieben sind, finden für das erfindungsgemäße Spritzgusswerkzeug auf gleiche Weise Anwendung, wobei das Spritzgusswerkzeug mehrere Isolationskörper verschiedener Ausgestaltungen aufweisen kann.

Dabei kann der Isolationskörper des Spritzgusswerkzeuges einteilig ausgebildet und/oder mittels eines generativen Fertigungsverfahrens hergestellt sein. Ferner kann der Isolationskörper ein Druckstück zur Anordnung zwischen einem Heißkanalverteilerkörper und einem Werkzeugkörper bilden, das durch den Isolationskörper geschaffen ist. Das Spritzgusswerkzeug kann schließlich einen Düsenkopf zur Aufnahme einer Heißkanaldüse auf dem Heißkanalverteilerkörper aufweisen, der durch den Isolationskörper gebildet ist.

Das Spritzgusswerkzeug weist alternativ und/oder mit besonderen Vorteil eine Heißkanaldüse zur Führung einer plastifizierten Kunststoffschmelze aus dem Heißkanalverteilerkörper in ein Werkzeug auf, wobei der Isolationskörper einen Aufsatz zur Anordnung an einer Düsenspitze der Heißkanaldüse bildet. Wenn die Heißkanaldüse im Spritzgusswerkzeug verbaut ist, kann der Aufsatz an der Düsenspitze aufgenommen und gegen das Formwerkzeug zur Anlage gebracht werden, das auch die Kavität für den Spritzguss bildet. Durch den Aufsatz auf dem amorphen Metall wird eine nur sehr geringe Wärmemenge von der heißen Heißkanaldüse in das kalte Werkzeug übertragen, da der Aufsatz als Insolationskörper dient.

Das Spritzgusswerkzeug kann auch einen Isolationskörper als Bestandteil einer einteilig ausgebildeten Heißkanaldüse bilden, indem der Isolationskörper als Bestandteil einer einteilig ausgebildeten Heißkanaldüse mittels eines generativen Fertigungsverfahrens aufgetragen wird. Der Auftrag des amorphen Metalls mittels des generativen Fertigungsverfahrens erfolgt beispielsweise auf einen Grundkörper aus einem abweichenden Werkstoff, beispielsweise aufweisend einen Werkzeugstahl. Der Isolationskörper bildet beispielsweise die obere Düsenspitze der Heißkanaldüse, die schließlich Abschnitte aufweist, die zur Anlage an das Spritzgusswerkzeug dienen. Das amorphe Metall kann auch auf weitere hier nicht näher benannte Bauteile eines Spritzgusswerkzeuges aufgetragen werden und das aufgetragene amorphe Metall bildet dann jeweils einen Isolationskörper als strukturellen Abschnitt des Bauteils. So kann der Isolationskörper aus amorphem Metall auch nur Abschnitte eines Distanzkörpers und/oder eines Düsenkopfes oder eine sonstigen Bauteils bilden.

### BEVORZUGTES AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine perspektivische Ansicht eines Heißkanalverteilerkörpers mit an diesem angeordneten Heißkanaldüsen, Druckstücken, und Düsenköpfen,
- Figur 2: eine Querschnittsansicht der Anordnung des Heißkanalverteilerkörpers zwischen zwei Werkzeugkörpern,
- Figur 3: eine perspektivische Ansicht eines Düsenkopfes,
- Figur 4: eine perspektivische Ansicht eines Druckstückes,
- Figur 5: eine Heißkanaldüse mit einem separat aufgeschraubten Aufsatz und
- Figur 6: eine Heißkanaldüse mit einem Isolationsbereich aus einem Isolationskörper gemäß der Erfindung.

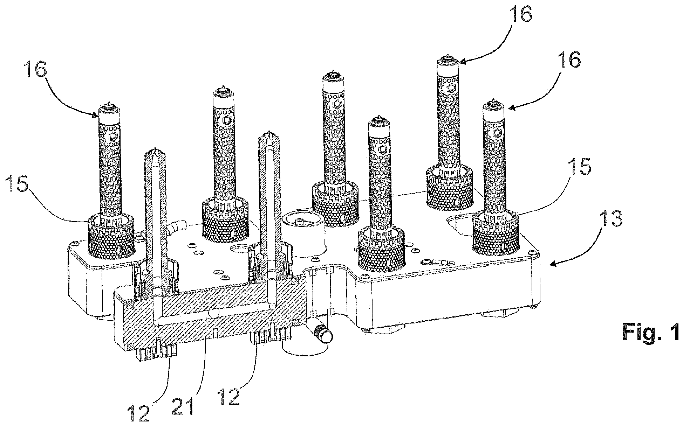

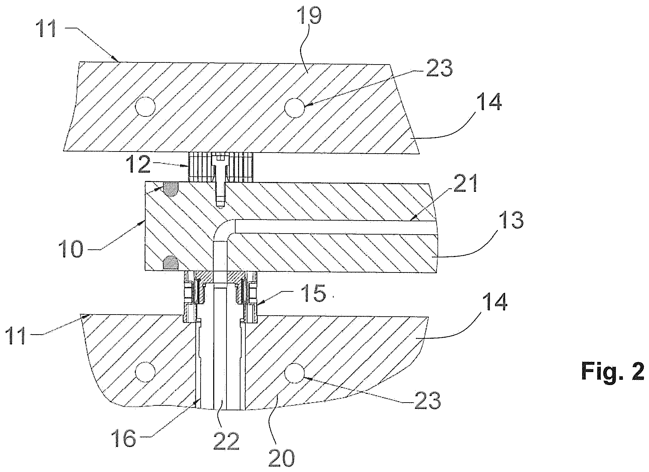

Figur 1 zeigt in einer perspektivischen Ansicht einen Heißkanalverteilerkörper 13, an dem mehrere Heißkanaldüsen 16 mittels Düsenköpfen 15 aufgenommen sind. Weiterhin befindet sich an dem Heißkanalverteilerkörper 13 mehrere Druckstücke 12, um den Heißkanalverteilerkörper 13 zwischen zwei Werkzeugkörpern anzuordnen, wie in der weiteren Figur 2 gezeigt. Innenliegend weist der Heißkanalverteilerkörper 13 Schmelzkanäle 21 auf, die sich in einen Düsenkanal 22 in den Heißkanaldüsen 16 fortsetzen.
Figur 2 zeigt eine Querschnittsansicht des Heißkanalverteilerkörpers 13 zwischen zwei Werkzeugkörpern 14, und auf einer Seite ist am Heißkanalverteilerkörper 13 eine Heißkanaldüse 16 mittels eines Düsenkopfes 15 aufgenommen. Auf der gegenüberliegenden Seite befindet sich ein Druckstück 12 in Anordnung am Heißkanalverteilerkörper 13. Das Druckstück 12 stützt den Heißkanalverteilerkörper 13 gegen einen Werkzeugkörper 14 in Form einer Aufspannplatte 19 ab, und der Düsenkopf 15 befindet sich in einer klemmenden Anordnung zwischen dem Heißkanalverteilerkörper 13 und einem Werkzeugkörper 14 in Form einer Formplatte 20.

Innerhalb des Heißkanalverteilerkörpers 13 ist der Schmelzkanal 21 gezeigt, der in den Düsenkanal 22 übergeht, und durch den Schmelzkanal 21 und den Düsenkanal 22 kann die plastifizierte Kunststoffschmelze geführt werden, da der Heißkanalverteilerkörper 13 und die Heißkanaldüse 16 auf einer Temperatur von beispielsweise 270°C gehalten werden. Hingegen weisen die Werkzeugkörper 14 in Form der Aufspannplatte 19 und der Formplatte 20 eine deutlich niedrigere Temperatur auf, beispielsweise sogar nur eine Raumtemperatur.

Die Darstellung zeigt das Druckstück 12 und den Düsenkopf 15 mit einer entsprechenden wärmeisolierend wirkenden geometrischen Struktur, wobei der Werkstoff des Druckstückes 12 und des Düsenkopfes 15 einen Isolationskörper 1 bilden, der erfindungsgemäß ein Metall aufweist, das direkt aus einer metallischen Schmelze gebildet ist und eine amorphe Struktur aufweist. Damit ist der Isolationskörper 1 insbesondere aus einem metallischen Glas gebildet. Insbesondere durch die Anordnung zwischen einem sehr heißen ersten Bauteil 10, beispielsweise dem Heißkanalverteilerkörper 13, und einem deutlich kälteren zweiten Bauteil 11, beispielsweise der Aufspannplatte 19 oder der Formplatte 20, entsteht durch den Isolationskörper 1 aus einem metallischen Glas ein nur sehr geringer Wärmeübergang, sodass die Heizleistung zur Führung der Temperatur im Heißkanalverteilerkörper 13 und der Heißkanaldüse 16 verringert werden kann, und zugleich kann die Kühlleistung der Werkzeugkörper 14 ebenfalls verringert werden, da ein geringerer Wärmeeintrag erfolgt. In der Aufspannplatte 19 und der Formplatte 20 sind hierfür Kühlkanäle 23 gezeigt, um die Platten 19 und 20 zu kühlen.

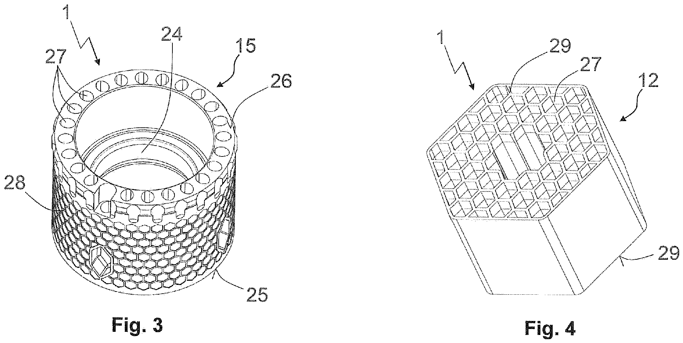

Figur 3 zeigt eine perspektivische Ansicht eines Düsenkopfes 15, der erfindungsgemäß ausgebildet ist als Isolationskörper 1 mit den Merkmalen der Erfindung. Der Düsenkopf 15 weist innenseitig einen Gewindebereich 24 auf, und ist etwa hülsenförmig ausgeführt, sodass im Innenbereich die Heißkanaldüse 16, siehe hierfür Figur 1, in den Gewindebereich 24 eingebracht und insbesondere eingeschraubt werden kann. Der hülsenförmige Düsenkopf 15 erstreckt sich von einer unteren Ringanlagefläche 25 zur Anlage gegen den heißen Heißkanalverteilerkörper 13 bis zu einer Ringanlagefläche 26 zur Anlage gegen den kalten Werkzeugkörper 14. Der Düsenkopf 15 zur Bildung des Isolationskörpers 1 ist mittels eines generativen Fertigungsverfahrens hergestellt worden, insbesondere mittels eines SLM-Verfahrens, und weist ein amorphes Metall auf.

Der Düsenkopf 15 ist durchzogen mit mehreren Hohlkammern 27, die sich röhrenförmig zwischen den beiden Anlageflächen 25 und 26 erstrecken, um den wärmeübertragenden Querschnitt mit Düsenkopf 15 möglichst zu minimieren. Zur strukturellen Aussteifung des Düsenkopfes 15 weist dieser zudem einen Wabenstruktur 28 auf.

Figur 4 zeigt eine perspektivische Ansicht eines Druckstückes 12 aus einem amorphen Metall, sodass das Druckstück 12 gemäß diesem Ausführungsbeispiel den Isolationskörper 1 des Spritzgusswerkzeuges bildet. Auch das Druckstück 12 weist Hohlkammern 27 mit einer Wabenstruktur 28 auf, wodurch eine Körperstruktur geschaffen wird, die das Druckstück 12 insbesondere zwischen den beiden Anlageflächen 29 mechanisch hoch belastbar macht, wobei durch die Hohlkammern 27 ein minimierter Materialquerschnitt zwischen den beiden Anlagenflächen 29 gebildet wird, sodass ein Wärmeübergang zwischen den beiden Anlagenflächen 29 auf gleiche Weise minimiert wird.

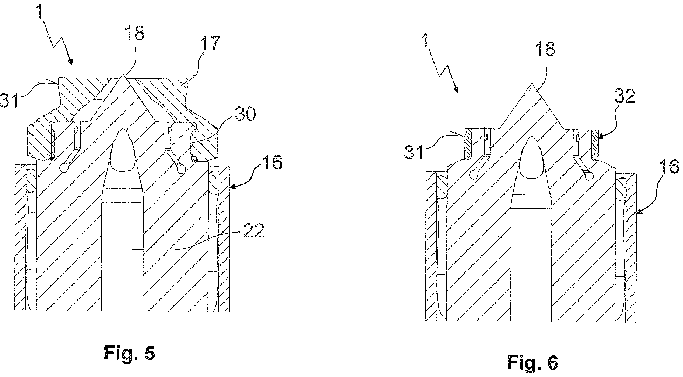

Figur 5 zeigt eine Düsenspitze 18 einer Heißkanaldüse 16, in der der Düsenkanal 22 ausgebildet ist. Auf die Düsenspitze 18 ist ein Aufsatz 17 mit einem Gewinde 30 aufgeschraubt worden, und der Aufsatz 17 bilden einen Isolationskörper 1 aus einem amorphen Metall. Der Aufsatz 17 dient zur Anlage gegen das Formwerkzeug des Spritzgusswerkzeuges, in dem auch die Kavität gebildet ist, wofür Anlageflächen 31 vorhanden sind. Durch die geringe Wärmeleitfähigkeit des Isolationskörpers 1 aus einem amorphen Metall erfolgt nur ein minimaler Wärmeübergang von der heißen Heißkanaldüse 16 in das kältere Werkzeug (letztes ist nicht dargestellt).

Eine weitere Ausgestaltung einer Heißkanaldüse 16 zeigt Figur 6, und an der Düsenspitze 18 befindet sich ein Materialabschnitt 32, der den Isolationskörper 1 bildet. Dieser Materialabschnitt wird gebildet, indem zwar der Isolationskörper 1 Bestandteil der einteiligen Heißkanaldüse 16 bildet, jedoch ist der Isolationskörper 1 mittels eines generativen Fertigungsverfahrens auf einen Grundkörper mit einem abweichenden Werkstoff der Heißkanaldüse 16 aufgetragen worden und der Materialabschnitt 32 besteht aus einem amorphen Metall. Der Materialabschnitt 32 dient zur Anlage gegen das Formwerkzeug des Spritzgusswerkes und weist zumindest eine Anlagefläche 31 auf.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein. Die Erfindung ist im beigefügten Anspruchssatz definiert.

### Bezugszeichenliste:

- 1: Isolationskörper

- 10: erstes Bauteil
- 11: zweites Bauteil
- 12: Druckstück
- 13: Heißkanalverteilerkörper
- 14: Werkzeugkörper
- 15: Düsenkopf
- 16: Heißkanaldüse
- 17: Aufsatz
- 18: Düsenspitze
- 19: Aufspannplatte
- 20: Formplatte
- 21: Schmelzkanal
- 22: Düsenkanal
- 23: Kühlkanal
- 24: Gewindebereich
- 25: Ringauflagefläche
- 26: Ringauflagefläche
- 27: Hohlkammer
- 28: Wabenstruktur
- 29: Anlagefläche
- 30: Gewinde
- 31: Anlagefläche
- 32: Materialabschnitt

## Patentansprüche

1. Isolationskörper (1) eines Spritzgusswerkzeugs zur thermischen Isolation eines ersten Bauteils (10) gegen ein zweites Bauteil (11) des Spritzgusswerkzeuges oder als Bestandteil eines Bauteils des Spritzgusswerkzeuges, wobei
der Isolationskörper (1) ein Metall aufweist, das direkt aus einer metallischen Schmelze gebildet ist und eine amorphe Struktur aufweist,
**dadurch gekennzeichnet,**
**dass** der Isolationskörper (1) ein Druckstück (12) zur Anordnung zwischen einem Heißkanalverteilerkörper (13) und einem Werkzeugkörper (14) bildet und/oder
**dass** der Isolationskörper (1) einen Düsenkopf (15) zur Aufnahme einer Heißkanaldüse (16) auf dem Heißkanalverteilerkörper (13) bildet und/oder
**dass** der Isolationskörper (1) einen Aufsatz (17) zur Anordnung an einer Düsenspitze (18) einer Heißkanaldüse (16) bildet und/oder
**dass** der Isolationskörper (1) einen Bestandteil einer einteilig ausgebildeten Heißkanaldüse (16) bildet.

2. Isolationskörper (1) nach Anspruch 1, **dadurch gekennzeichnet,**
**dass** der Isolationskörper (1) einteilig ausgebildet und/oder mittels eines generativen Fertigungsverfahrens hergestellt ist.

3. Isolationskörper (1) nach Anspruch 1,
**dadurch gekennzeichnet,**
**dass** der Isolationskörper (1) als Bestandteil der einteilig ausgebildeten Heißkanaldüse (16) mittels des generativen Fertigungsverfahrens auf einen Grundkörper eines abweichenden Werkstoffes der Heißkanaldüse (16) aufgetragen ist.

4. Isolationskörper (1) nach einem der vorgenannten Ansprüche,
**dadurch gekennzeichnet,**
**dass** der Isolationskörper (1) ein Metall umfassend die Legierung Zr_{52,5}Ti₅Cu_{17,9}Ni_{14,6}Al₁₀ aufweist und/oder dass das Metall zur Bildung des Isolationskörpers (1) auf Zirkonium basiert.

5. Spritzgusswerkzeug mit einem Isolationskörper (1) zur thermischen Isolation eines ersten Bauteils (10) gegen ein zweites Bauteil (11) des Spritzgusswerkzeuges, wobei der Isolationskörper (1) ein Metall aufweist, das direkt aus einer metallischen Schmelze gebildet ist und eine amorphe Struktur aufweist
**dadurch gekennzeichnet,**
**dass** der Isolationskörper (1) ein Druckstück (12) zur Anordnung zwischen einem Heißkanalverteilerkörper (13) und einem Werkzeugkörper (14) bildet und/oder
**dass** der Isolationskörper (1) einen Düsenkopf (15) zur Aufnahme einer Heißkanaldüse (16) auf dem Heißkanalverteilerkörper (13) bildet und/oder
**dass** der Isolationskörper (1) einen Aufsatz (17) zur Anordnung an einer Düsenspitze (18) einer Heißkanaldüse (16) bildet und/oder dass der Isolationskörper (1) einen Bestandteil einer einteilig ausgebildeten Heißkanaldüse (16) bildet.

6. Spritzgusswerkzeug nach Anspruch 5, **dadurch gekennzeichnet,**
**dass** der Isolationskörper (1) einteilig ausgebildet und/oder mittels eines generativen Fertigungsverfahrens hergestellt ist.

7. Spritzgusswerkzeug nach Anspruch 5 oder 6,
**dadurch gekennzeichnet,**
**dass** ein Druckstück (12) zur Anordnung zwischen einem Heißkanalverteilerkörper (13) und einem Werkzeugkörper (14) vorgesehen ist, das durch den Isolationskörper (1) gebildet ist.

8. Spritzgusswerkzeug nach einem der Ansprüche 5 bis 7,
**dadurch gekennzeichnet,**
**dass** ein Düsenkopf (15) zur Aufnahme einer Heißkanaldüse (16) auf dem Heißkanalverteilerkörper (13) vorgesehen ist, der durch den Isolationskörper (1) gebildet ist.

9. Spritzgusswerkzeug nach einem der Ansprüche 5 bis 8,
**dadurch gekennzeichnet,**
**dass** eine Heißkanaldüse (16) zur Führung einer plastifizierten Kunststoffschmelze aus dem Heißkanalverteilerkörper (13) in ein Werkzeug vorgesehen ist, wobei der Isolationskörper (1) einen Aufsatz (17) zur Anordnung an einer Düsenspitze (18) der Heißkanaldüse (16) bildet.

10. Spritzgusswerkzeug nach einem der Ansprüche 5 bis 9,
**dadurch gekennzeichnet,**
**dass** der Isolationskörper (1) einen Bestandteil einer einteilig ausgebildeten Heißkanaldüse (16) bildet.

11. Spritzgusswerkzeug nach einem der Ansprüche 5 bis 10,
**dadurch gekennzeichnet,**
**dass** der Isolationskörper (1) als Bestandteil der einteilig ausgebildeten Heißkanaldüse (16) mittels des generativen Fertigungsverfahrens auf einen Grundkörper eines abweichenden Werkstoffes der Heißkanaldüse (16) aufgetragen ist.

## Claims

1. An insulating body (1) of an injection molding tool for the thermal insulation of a first component (10) from a second component (11) of the injection molding tool or as an element of a component of the injection molding tool, wherein the insulating body (1) comprises a metal that is formed directly from a metallic melt and has an amorphous structure,
**characterized in that**
the insulating body (1) forms a pressure piece (12) for arrangement between a hot runner distributor body (13) and a tool body (14); and/or
**in that** the insulating body (1) forms a nozzle head (15) for mounting a hot runner nozzle (16) on the hot runner distributor body (13); and/or
**in that** the insulating body (1) forms an attachment (17) for arrangement on nozzle tip (18) of a hot runner nozzle (16); and/or
**in that** the insulating body (1) forms an element of a hot runner nozzle (16) formed in one part.

2. An insulating body (1) in accordance with claim 1,
**characterized in that**
the insulating body (1) is formed in one part and/or is produced by means of a generative production method.

3. An insulating body (1) in accordance with claim 1,
**characterized in that**
the insulating body (1) is applied as an element of the hot runner nozzle (16) formed in one part by means of the generative production method to a base body of a different material of the hot runner nozzle (16).

4. An insulating body (1) in accordance with one of the preceding claims, **characterized in that**
the insulating body (1) comprises a metal comprising the alloy Zr_{52.5} Ti₅ Cu_{17,9} Ni_{14,6} Al₁₀; and/or **in that** the metal for forming the insulating body (1) is based on zirconium.

5. An injection molding tool having an insulating body (1) for the thermal insulation of a first element (10) from a second element (11) of the injection molding tool, wherein the insulating body (1) comprises a metal that is formed directly from a metallic melt and has an amorphous structure,
**characterized in that**
the insulating body (1) forms a pressure piece (12) for arrangement between a hot runner distributor body (13) and a tool body (14); and/or
**in that** the insulating body (1) forms a pressure piece (12) for mounting a hot runner nozzle (16) on the hot runner distributor body (13); and/or
**in that** the insulating body (1) forms an attachment (17) for arrangement on a nozzle tip (18) of a hot runner nozzle (16); and/or
**in that** the insulating body (1) forms an element of a hot runner nozzle (16) formed in one part.

6. An injection molding tool in accordance with claim 5, **characterized in that**
the insulating body (1) is formed in one part and/or is produced by means of a generative production method.

7. An injection molding tool in accordance with claim 5 or claim 6, **characterized in that**
a pressure piece (12) is provided for arrangement between a hot runner distributor body (13) and a tool body (14) that is formed by the insulating body (1).

8. An injection molding tool in accordance with one of the claims 5 to 7, **characterized in that**
that a pressure piece (15) is provided for mounting a hot runner nozzle (16) on the hot runner distributor body (13) that is formed by the insulating body (1).

9. An injection molding tool in accordance with one of the claims 5 to 8, **characterized in that**
a hot runner nozzle (16) is provided for conducting a plasticized plastic melt composed of the hot runner distributor body (13) into a tool, with the insulating body (1) forming an attachment (17) for arrangement at a nozzle tip (18) of the hot runner nozzle (16).

10. An injection molding tool in accordance with one of the claims 5 to 9, **characterized in that**
the insulating body (1) forms an element of a hot runner nozzle (16) formed in one part.

11. An injection molding tool in accordance with one of the claims 5 to 10, **characterized in that**
the insulating body (1) is applied as an element of the hot runner nozzle (16) formed in one part by means of the generative production method to a base body of a different material of the hot runner nozzle (16).

## Revendications

1. Corps isolant (1) d'un outil de moulage par injection, destiné à l'isolation thermique d'un premier élément structural (10) par rapport à un second élément structural (11) de l'outil de moulage par injection ou en tant qu'élément constitutif d'un élément structural de l'outil de moulage par injection, dans lequel
le corps isolant (1) présente un métal, qui est directement formé à partir d'un métal fondu et qui présente une structure amorphe,
**caractérisé en ce que**
le corps isolant (1) forme une pièce de pression (12) destinée à être agencée entre un corps de collecteur à canaux chauds (13) et un corps d'outil (14) et/ou
le corps isolant (1) forme une tête de buse (15) destinée à recevoir une buse de canal chaud (16) sur le corps de collecteur à canaux chauds (13) et/ou
le corps isolant (1) forme un chapeau (17) destiné à être agencé sur une pointe de buse (18) d'une buse de canal chaud (16) et/ou
le corps isolant (1) forme un élément constitutif d'une buse de canal chaud (16) réalisée en une seule pièce.

2. Corps isolant (1) selon la revendication 1,
**caractérisé en ce que**
le corps isolant (1) est réalisé en une seule pièce et/ou est fabriqué au moyen d'un procédé de fabrication additive.

3. Corps isolant (1) selon la revendication 1,
**caractérisé en ce que**
le corps isolant (1) en tant qu'élément constitutif de la buse de canal chaud (16) réalisée en une seule pièce est appliqué, au moyen du procédé de fabrication additive, sur un corps de base en un matériau différent de la buse de canal chaud (16).

4. Corps isolant (1) selon l'une des revendications précédentes,
**caractérisé en ce que**
le corps isolant (1) présente un métal comprenant l'alliage Zr_{52,5}Ti₅Cu_{17,9}Ni_{14,6}Al₁₀ et/ou **en ce que** le métal pour la formation du corps isolant (1) est à base de zirconium.

5. Outil de moulage par injection doté d'un corps isolant (1) destiné à l'isolation thermique d'un premier élément structural (10) par rapport à un second élément structural (11) de l'outil de moulage par injection, le corps isolant (1) présentant un métal, qui est directement formé à partir d'un métal fondu et qui présente une structure amorphe
**caractérisé en ce que**
le corps isolant (1) forme une pièce de pression (12) destinée à être agencée entre un corps de collecteur à canaux chauds (13) et un corps d'outil (14) et/ou
le corps isolant (1) forme une tête de buse (15) destinée à recevoir une buse de canal chaud (16) sur le corps de collecteur à canaux chauds (13) et/ou
le corps isolant (1) forme un chapeau (17) destiné à être agencé sur une pointe de buse (18) d'une buse de canal chaud (16) et/ou
le corps isolant (1) forme un élément constitutif d'une buse de canal chaud (16) réalisée en une seule pièce.

6. Outil de moulage par injection selon la revendication 5,
**caractérisé en ce que**
le corps isolant (1) est réalisé en une seule pièce et/ou est fabriqué au moyen d'un procédé de fabrication additive.

7. Outil de moulage par injection selon la revendication 5 ou 6,
**caractérisé en ce que**
une pièce de pression (12) destinée à être agencée entre un corps de collecteur à canaux chauds (13) et un corps d'outil (14) est prévue, ladite pièce de pression étant formée par le corps isolant (1).

8. Outil de moulage par injection selon l'une des revendications 5 à 7,
**caractérisé en ce que**
une tête de buse (15) destinée à recevoir une buse de canal chaud (16) sur le corps de collecteur à canaux chauds (13) est prévue, ladite tête de buse étant formée par le corps isolant (1).

9. Outil de moulage par injection selon l'une des revendications 5 à 8,
**caractérisé en ce que**
une buse de canal chaud (16) destinée au guidage d'une matière plastique fondue plastifiée depuis le corps de collecteur à canaux chauds (13) jusqu'à un outil est prévue, le corps isolant (1) formant un chapeau (17) destiné à être agencé sur une pointe de buse (18) de la buse de canal chaud (16).

10. Outil de moulage par injection selon l'une des revendications 5 à 9,
**caractérisé en ce que**
le corps isolant (1) forme un élément constitutif d'une buse de canal chaud (16) réalisée en une seule pièce.

11. Outil de moulage par injection selon l'une des revendications 5 à 10,
**caractérisé en ce que**
le corps isolant (1) en tant qu'élément constitutif de la buse de canal chaud (16) réalisée en une seule pièce est appliqué, au moyen du procédé de fabrication additive, sur un corps de base en un matériau différent de la buse de canal chaud (16).
